# EUROPEAN PATENT APPLICATION

(11) **EP 2 760 117 A1**
(43) Date of publication of application: **30.07.2014**
(21) Application number: 11872730.4
(22) Date of filing: 22.09.2011
(51) Int. Cl.: H02M 3/155

(54) **SWITCHING POWER SUPPLY AND ILLUMINATION APPARATUS**

(71) Applicant: Toshiba Lighting & Technology Corporation, Yokosuka-shi, Kanagawa 237-8510 (JP)
(72) Inventor: KITAMURA, Noriyuki, Yokosuka-shi Kanagawa 237-8510 (JP); TAKAHASHI, Yuji, Yokosuka-shi Kanagawa 237-8510 (JP)
(74) Representative: Bokinge, Ole
(86) International application number: PCT/JP2011/071725
(87) International publication number: WO 2013/042265

(57) **Abstract**

A switching power source includes a first inductor, a second inductor, a switching element, a current control element, a rectifier element, and a control circuit. The switching element supplies a power source voltage to the first inductor and flows a current when being on. The current control element has a first main terminal, a second main terminal, and a control terminal, with the second main terminal connected to the switching element, and detects a current flowing in the switching element. The control circuit turns off the current control element and interrupts the current flowing in the switching element when a voltage between the second main terminal and the first main terminal of the current control element is equal to or higher than a specified value. The rectifier circuit is series-connected to one of the switching element and the current control element and flows the current of the first inductor when the switching element turns off. The second inductor is magnetically coupled to the first inductor, in which a potential turning on the switching element is induced when the current of the first inductor increases and a potential turning off the switching element is induced when the current of the switching element decreases, and supplies the induced potential to a control terminal of the switching element.

## Description

### [Technical Field]

Embodiments of the invention relate to a switching power source and a lighting device.

### [Background Art]

Switching power sources using switching elements are used for a wide range of application as direct-current or alternating-current power sources. As an example, the sources are also used as lighting power sources. That is, these days, in lighting devices, lighting light sources are being replaced from incandescent lamps and fluorescent lamps by power-saving and long-life light sources including light-emitting diodes (LEDs), for example. Further, new lighting light sources including EL (Electro-Luminescence) and organic light-emitting diode (OLED) are developed. The brightness of these lighting light sources depends on flowing current values, and power source circuits for supplying constant currents are necessary for turning on lightings. Further, voltages are necessary to be converted for matching input power source voltages with rated voltages of lighting light sources such as LEDs. As high-efficiency power sources suitable for power saving and downsizing, switching power sources including DC-DC converters are known. Furthermore, LED lighting-up devices using self-excited DC-DC converters are proposed (for example, see Patent Literature 1).

### [Citation List]

### [Patent Literature]

[PTL 1] JP-A-2004-119078

### [Summary]

### [Technical Problem]

However, the self-excited DC-DC converter detects the current of the switching element and switches the switching element to on or off. When the current of the switching element is made smaller and the voltage between the ends of the element to be detected is made lower, the switching element may not sufficiently be turned on and loss may increase. Further, if the voltage is too high, the switching loss when the current is interrupted increases.

An object of the embodiments of the invention is to provide a switching power source and a lighting device with less power loss.

### [Solution to Problem]

A switching power source according to an aspect of the invention includes a first inductor, a second inductor, a switching element, a current control element, a rectifier element, and a control circuit. The switching element supplies a power source voltage to the first inductor and flows a current when being on. The current control element has a first main terminal, a second main terminal, and a control terminal, with the second main terminal connected to the switching element, and detects a current flowing in the switching element. The control circuit turns off the current control element and interrupts the current flowing in the switching element when a voltage between the second main terminal and the first main terminal of the current control element is equal to or higher than a specified value. The rectifier element is series-connected to one of the switching element and the current control element and flows the current of the first inductor when the switching element turns off. The second inductor is magnetically coupled to the first inductor, in which a potential turning on the switching element is induced when the current of the first inductor increases and a potential turning off the switching element is induced when the current of the switching element decreases, and supplies the induced potential to a control terminal of the switching element.

Further, a lighting device according to another aspect of the invention includes the switching power source and a lighting load connected as a load circuit of the switching power source.

### [Brief Description of Drawings]

FIG. 1 is a circuit diagram illustrating a lighting device including a switching power source according to a first example.
FIG. 2 is a characteristic diagram illustrating dependence of a current of a current control element on a potential of a control terminal.
FIG. 3 is a circuit diagram illustrating a lighting device including a switching power source according to a second example.

### [Description of Embodiments]

### (First Embodiment)

A switching power source of the first embodiment has a first inductor, a switching element that supplies a power source voltage to the first inductor and flows a current when being on, a current control element that has a first main terminal, a second main terminal, and a control terminal, with the second main terminal connected to the switching element, and detects a current flowing in the switching element, a control circuit that turns off the current control element and interrupts the current flowing in the switching element when a voltage between the second main terminal and the first main terminal of the current control element is equal to or higher than a specified value, a rectifier element that is series-connected to one of the switching element and the current control element and flows the current of the first inductor when the switching element turns off, and a second inductor that is magnetically coupled to the first inductor, in which a potential turning on the switching element is induced when the current of the first inductor increases and a potential turning off the switching element is induced when the current of the switching element decreases, and supplies the induced potential to a control terminal of the switching element.

### (Second Embodiment)

The switching power source of the second embodiment is characterized in that, in the switching power source of the first embodiment, the switching element is a normally-on element.

### (Third Embodiment)

The switching power source of the third embodiment is characterized in that, in the switching power source of the first embodiment, the control circuit outputs a negative potential to the control terminal of the current control element when the voltage between the first main terminal and the second main terminal is equal to or higher than the specified value.

### (Fourth Embodiment)

The switching power source of the fourth embodiment is characterized in that, in the switching power source of the first embodiment, the control circuit has a first transistor that is connected between the first main terminal and the second main terminal and turns on when the voltage between the first main terminal and the second main terminal is equal to or higher than the specified value.

### (Fifth Embodiment)

The switching power source of the fifth embodiment is characterized in that, in the switching power source of the fourth embodiment, the control circuit further has a first resistor with one end connected to the first main terminal, a second resistor with one end connected to the other end of the first resistor and the other end supplied with a potential lower than a potential of the first main terminal, and a second transistor that is connected between the ends of the second resistor, and turns on and short-circuits the ends of the second resistor when the first transistor turns on.

### (Sixth Embodiment)

A lighting device of the sixth embodiment has the switching power source of the first embodiment and a lighting load connected as a load circuit of the switching power source.

Hereinafter, examples will be explained in detail with reference to the drawings. Note that, in the specification of this application and the respective drawings, the same elements as those previously described with reference to the previously mentioned drawings have the same signs and their detailed explanation will be appropriately omitted.

First, a first example will be explained.

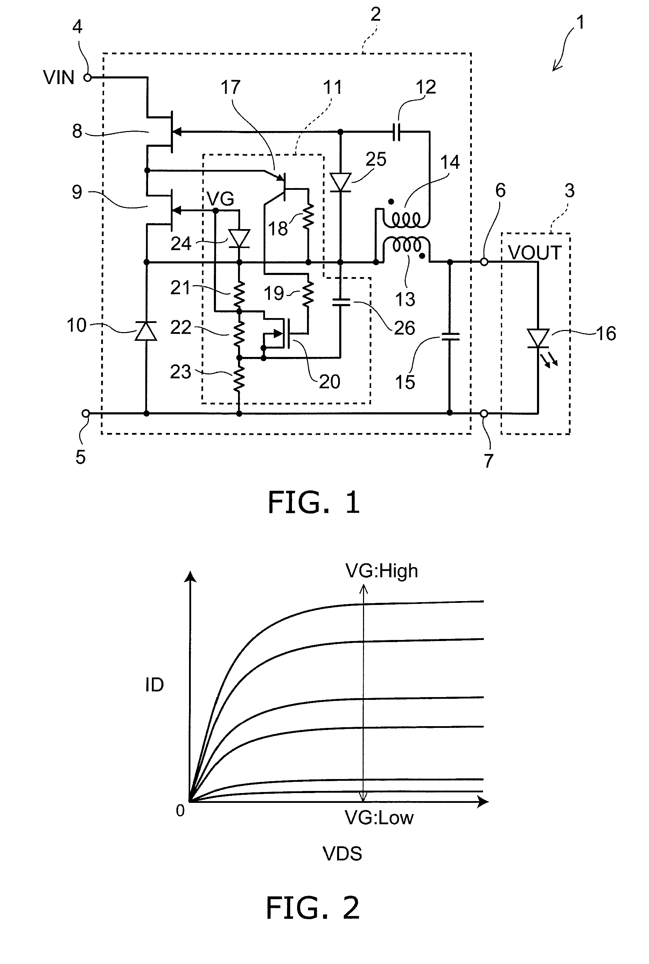

FIG. 1 is a circuit diagram illustrating a lighting device including a switching power source according to the first example.

As shown in FIG. 1, a lighting device 1 includes a switching power source 2 that drops an input direct-current power source voltage VIN to a voltage VOUT, and a lighting load 3 as a load circuit of the switching power source 2. The lighting load 3 has a lighting light source 16. The lighting light source 16 includes an LED, for example, and turns on when the voltage VOUT is supplied from the switching power source 2.

In the switching power source 2, a switching element 8 and a current control element 9 are series-connected between a high-potential power source terminal 4 and a high-potential output terminal 6. That is, the drain of the switching element 8 is connected to the high-potential power source terminal 4, the source of the switching element 8 is connected to the drain (second main terminal) of the current control element 9, and the source (first main terminal) of the current control element 9 is connected to the cathode of a rectifier element 10. The switching element 8 and the current control element 9 are field-effect transistors (FETs), for example, high electron mobility transistors (HEMTs), and normally-on elements.

Further, the anode of the rectifier element 10 is connected to a low-potential power source terminal 5. The rectifier element 10 is connected between the current control element 9 and the low-potential power source terminal 5 in a direction from the low-potential power source terminal 5 to the current control element 9 as a forward direction. The rectifier element 10 is a diode, for example, a schottky barrier diode, for example.

A control circuit 11 is a circuit connected between the drain and the source of the current control element 9 and outputs a negative potential to the gate of the current control element 9 (the control terminal of the current control element) when the drain-source voltage of the current control element 9 is equal to or higher than a specified value. Here, the specified value is a voltage value lower than the voltage between the second main terminal and the first main terminal when the current control element 9 reaches a current value exhibiting constant-current characteristics, i.e., the upper limit, and a voltage value that turns off the current control element 9 while the current increases toward the upper limit.

The emitter of a first transistor 17 is connected to the drain of the current control element 9, the base is connected to the source of the current control element 9 via a resistor 18, and the collector is connected to the gate of a second transistor 20 via a resistor 19. Note that the resistor 19 protects the gate of the second transistor 20. Further, the first transistor 17 is a PNP bipolar transistor and the second transistor 20 is an N-channel MOSFET.

Further, a first resistor 21, a second resistor 22, and a resistor 23 are series-connected between the source of the current control element 9 and the low-potential power source terminal 5. The drain of the second transistor 20 is connected to the connection point of the first resistor 21 and the second resistor 22 and the gate of the current control element 9. Further, a diode 24 is connected between the gate and the source of the current control element 9. The source of the second transistor 20 is connected to the connection point of the second resistor 22 and the resistor 23. Further, a capacitor 26 is connected between the connection point of the second resistor 22 and the resistor 23 and the source of the current control element 9. Note that the diode 24 protects the gate of the current control element 9.

A first inductor 13 is connected between the connection point of the source of the current control element 9 and the cathode of the rectifier element 10 and the high-potential output terminal 6.

A second inductor 14 is magnetically coupled to the first inductor 13 with one end connected to the connection point of the source of the current control element 9 and the cathode of the rectifier element 10 and the other end connected to the gate of the switching element 8 (the control terminal of the switching element) via a capacitor 12. Further, a diode 25 is connected between the gate of the switching element 8 and the source of the current control element 9. The diode 25 protects the gate of the switching element 8.

Further, a smoothing capacitor 15 is connected between the high-potential output terminal 6 and a low-potential output terminal 7. The low-potential output terminal 7 is connected to the low-potential power source terminal 5.

Next, an operation of the switching power source 2 will be explained.

When the power source voltage VIN is supplied between the high-potential power source terminal 4 and the low-potential power source terminal 5, the switching element 8 and the current control element 9 are the normally-on elements and both are on. Then, a current flows in a path of the high-potential power source terminal 4, the switching element 8, the current control element 9, the first inductor 13, the smoothing capacitor 15, and the low-potential power source terminal 5, and the smoothing capacitor 15 is charged. The voltage between the ends of the smoothing capacitor 15, i.e., the voltage between the high-potential output terminal 6 and the low-potential output terminal 7 is supplied to the lighting light source 16 of the lighting load 3 as the output voltage VOUT of the switching power source 2.

Note that the switching element 8 and the current control element 9 are on, and nearly the power source voltage VIN is applied to the ends of the rectifier element 10. The rectifier element 10 is inversely biased and no current flows in the rectifier element 10.

When the output voltage VOUT reaches a predetermined voltage, a current flows in the lighting light source 16 and the lighting light source 16 turns on. Concurrently, the current flows in the path of the high-potential power source terminal 4, the switching element 8, the current control element 9, the first inductor 13, the smoothing capacitor 15 and the lighting light source 16, and the low-potential power source terminal 5. For example, when the lighting light source 16 is an LED, the predetermined voltage is a forward voltage of the LED and determined in response to the lighting light source 16.

When the drain-source voltage of the current control element 9 is lower than the specified value, i.e., the base-emitter voltage of the first transistor 17 of the control circuit 11 is lower than the specified value, the first transistor 17 is off and the second transistor 20 is also off. As a result, the second transistor 20 connected between the ends of the second resistor 22 is open and the gate potential VG of the current control element 9 is a voltage formed by dividing the voltage between the source of the current control element 9 and the low-potential power source terminal 5 by the first resistor 21, the second resistor 22, and the resistor 23. Note that the respective resistance values of the first resistor 21, the second resistor 22, and the resistor 23 are set so that the gate potential VG may maintain the current control element 9 on.

The power source voltage VIN is supplied to the first inductor 13 via the switching element 8 and the current control element 9, and the current flowing in the first inductor 13 increases. The second inductor 14 is magnetically coupled to the first inductor 13, and an electromotive force having polarity with the capacitor 12 side at the higher potential is induced in the second inductor 14. As a result, a positive potential is supplied to the gate of the switching element 8 with respect to the source via the capacitor 12, and the switching element 8 maintains the on-state.

When the current flowing in the current control element 9 increases, the drain-source voltage of the current control element 9 rises. When the drain-source voltage of the current control element 9 is equal to or higher than the specified value, the first transistor 17 of the control circuit 11 turns on. The collector voltage of the first transistor 17 rises and the second transistor 20 turns on. As a result, the ends of the second resistor 22 are short-circuited, the gate potential VG of the current control element 9 becomes lower, the current control element 9 turns off, and the current of the switching element 8 is interrupted. Note that the respective resistance values of the first resistor 21, the second resistor 22, and the resistor 23 are set so that the gate potential VG may turn off the current control element 9.

When the current of the switching element 8 is interrupted, the first inductor 13 continues to flow the current in the path of the smoothing capacitor 15 and the lighting load 3, the rectifier element 10, and the first inductor 13. Accordingly, the lighting light source 16 continues to light. The first inductor 13 releases energy, and the current of the first inductor 13 decreases. As a result, an electromotive force having polarity with the capacitor 12 side at the lower potential is induced in the second inductor 14. A negative potential is supplied to the gate of the switching element 8 with respect to the source via the capacitor 12, and the switching element 8 maintains the off-state.

When the energy accumulated in the first inductor 13 is zero, the current flowing in the first inductor 13 becomes zero. Concurrently, the output voltage VOUT is lower to the predetermined voltage. The direction of the electromotive force induced in the second inductor 14 is reversed again and an electromotive force with the capacitor 12 side at the higher potential is induced. Thereby, the higher potential is supplied to the gate of the switching element 8 than that to the source and the switching element 8 turns on. Thereby, the smoothing capacitor 15 returns to a state charged at the predetermined voltage.

Subsequently, the above described operation is repeated. The switching between on and off of the switching element 8 is automatically repeated, and the output voltage VOUT formed by dropping of the power source voltage VIN is supplied to the lighting light source 16. Further, the current supplied to the lighting light source 16 is a constant current limited to the smaller current value than the upper limit by the control circuit 11. Accordingly, the lighting light source 16 may be stably lighted.

Next, advantages of the example will be explained.

In the example, the current control element 9 detects the current of the switching element 8. As a result, power loss may be reduced compared to the case where a resistor for current detection is used.

Further, in the example, the control circuit 11 detects the voltage between the second main terminal and the first main terminal of the current control element 9, i.e., the drain-source voltage VDS, and outputs a negative potential to the control terminal of the current control element 9, i.e., the gate to turn off the current control element 9 when the voltage is equal to or higher than the specified value. As a result, the current may be interrupted at the lower voltage and the switching loss may be reduced. Further, the current may be quickly interrupted and the high-frequency operation is possible, and the switching loss may be further reduced.

The above described advantages are clear by assumption of the configuration without the control circuit 11.

For example, when the switching element 8 is turned off not by using the control circuit 11, but by the constant-current characteristics of the current control element 9, the current is interrupted under the condition that the voltage between the second main terminal and the first main terminal is higher, and the switching loss increases.

FIG. 2 is a characteristic diagram illustrating dependence of the current of the current control element on the potential of the control terminal.

FIG. 2 shows relationships between the drain-source voltage VDS of an FET as the current control element and the drain current ID with the gate potential VG as a parameter.

When the drain current ID of the FET increases and exhibits the constant-current characteristics, the drain-source voltage VDS rapidly rises with the increase of the drain current ID. However, for the FET to exhibit the constant-current characteristics, the drain-source voltage VDS is necessary to be equal to or higher than |VGS - Vth|. Here, the VGS is a gate-source voltage and the Vth is a threshold voltage.

Therefore, in the case where the switching element 8 is turned off by the rapid rise of the drain-source voltage according to the constant-current characteristics when the current of the switching element 8 reaches the upper limit, the drain-source voltage VDS is interrupted at the voltage equal to or higher than |VGS - Vth|.

If the upper limit of the current of the switching element 8 is reduced to make the drain-source voltage VDS at the interruption lower, the energy accumulated in the first inductor 13 decreases. As a result, it becomes possible that the switching element 8 may not sufficiently be turned on. Further, if the upper limit is taken sufficiently high and the drain-source voltage VDS at interruption is made higher, the current is interrupted at the higher voltage and the relatively lower speed, and the switching loss increases.

On the other hand, in the example, the control circuit 11 detects the voltage between the second main terminal and the first main terminal of the current control element 9, and outputs a negative potential to the control terminal of the current control element 9 to turn off the current control element 9 when the voltage is equal to or higher than the specified value. As a result, the current may be interrupted at the lower voltage and the switching loss may be reduced. Further, the current may be quickly interrupted and the high-frequency operation is possible, and the switching loss may be further reduced.

Furthermore, in the case where HEMTs are used as the respective elements including the switching element 8 and current control element 9, a high-frequency operation is possible. For example, an operation on the order of megahertz is possible. Especially, in the case of using GaN HEMTs, further high-frequency operation is possible and the element withstand voltage is higher, and thus, the chip size with the same withstand voltage may be downsized.

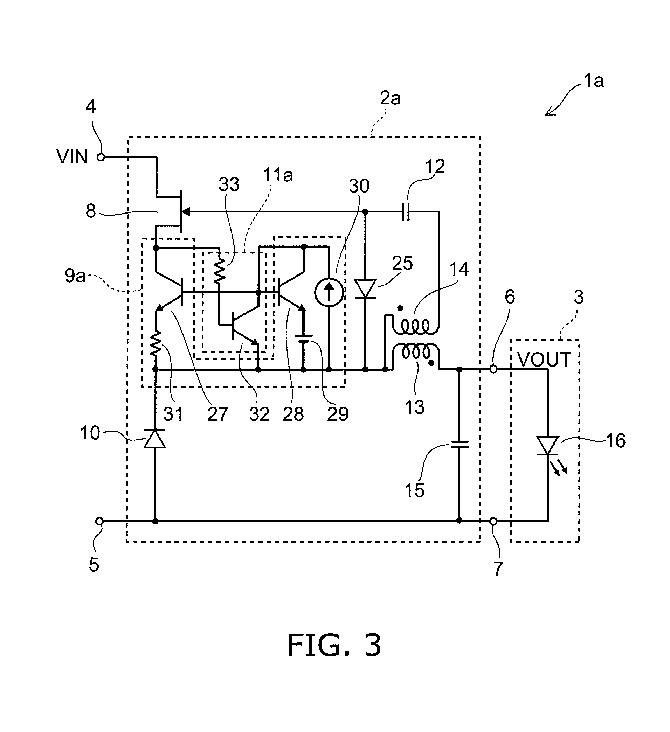

FIG. 3 is a circuit diagram illustrating a lighting device including a switching power source according to a second example.

As shown in FIG. 3, a switching power source 2a is different from the switching power source 2 in the first example in the configuration of a current control element 9a and a control circuit 11a. That is, in the example, the current control element 9a and the control circuit 11a are provided in place of the current control element 9 and the control circuit 11 in the first example. Further, a lighting device 1a includes the lighting load 3 as a load circuit of the switching power source 2a. The lighting load 3 has the lighting light source 16. The lighting light source 16 includes an LED, for example, and turns on when the voltage VOUT is supplied from the switching power source 2a. The rest of the configuration except the switching power source and the current control element and the control circuit of the lighting device according to the example is the same as the configuration shown in FIG. 1.

The current control element 9a is a current mirror including transistors 27, 28.

The transistor 28 is the reference side of the current mirror, and the base and the collector are connected and diode-connected. The emitter of the transistor 28 is connected to a first main terminal of the current control element 9a, i.e., the other end of a resistor 27 via a constant-voltage power source circuit 29, and the emitter voltage is higher by a constant voltage with respect to the potential of the first main terminal of the current control element 9a. A constant current equal to the upper limit is supplied from a constant-current power source circuit 30 to the base and the collector of the transistor 28.

The transistor 27 is the output side of the current mirror. The base of the transistor 27 is a control terminal of the current control element 9a and is connected to the base and the collector of the transistor 28. The collector of the transistor 27 is a second main terminal of the current control element 9a and connected to the source of the switching element 8. Further, the emitter of the transistor 27 is connected to one end of a resistor 31. The other end of the resistor 31 is the first main terminal of the current control element 9a and connected to the cathode of the rectifier element 10. The constant current supplied to the transistor 28 is folded back as a collector current of the transistor 27. Note that the transistors 27, 28 are NPN bipolar transistors.

The dependence of the current (collector current) of the current control element 9a on the voltage between the second main terminal and the first main terminal is similar to the characteristic diagram shown in FIG. 2. That is, the characteristics in which the drain current in FIG. 2 is replaced by the collector current and the drain-source voltage VDS is replaced by the voltage between the second main terminal and the first main terminal are obtained. Further, the potential VG of the control terminal in FIG. 2 corresponds to the current value of the constant current of the constant-current power source circuit 30 in the example, i.e., the upper limit.

The current control element 9a exhibits the constant-current characteristics when the current is the upper limit. Further, while the current reaches the upper limit, the current increases with the increase of the voltage between the second main terminal and the first main terminal of the current control element 9a. The voltage between the second main terminal and the first main terminal is higher than the collector-emitter voltage of the transistor 27 by the voltage drop of the resistor 31. Note that the voltage drop of the resistor 31 when the current is the upper limit is equal to the voltage of the constant-voltage power source circuit 29, and the constant-voltage power source circuit 29 may be replaced by a resistor having a resistance value equal to that of the resistor 31.

The control circuit 11a has a first transistor 32 connected between the collector of the transistor 27 as the second main terminal of the current control element 9a and the other end of the resistor 31 as the first main terminal via a resistor 33.

One end of the resistor 33 is connected to the collector of the transistor 27 and the other end is connected to the base of the first transistor 32. The emitter of the first transistor 32 is connected to the first main terminal of the current control element 9a, i.e., the other end of the resistor 31, and the collector of the first transistor 32 is connected to the base of the transistor 27 and the base and the collector of the transistor 28. Note that the first transistor 32 is an NPN bipolar transistor.

The first transistor 32 of the control circuit 11a is off when the voltage between the second main terminal and the first main terminal of the current control element 9a is lower than the specified value. As a result, the control circuit 11a has no effect on the operation of the current control element 9a and the current of the current control element 9a increases. When the voltage between the second main terminal and the first main terminal of the current control element 9a is equal to or higher than the specified value, the first transistor 32 turns on. As a result, the control circuit 11a outputs 0 V as the voltage between the base of the transistor 27 as the control terminal of the current control element 9a and the first main terminal, and turns off the current control element 9a.

As described above, the control circuit 11a turns off the current control element 9a when the voltage between the second main terminal and the first main terminal of the current control element 9a is equal to or higher than the specified value while the current of the current control element 9a increases to the upper limit. As a result, like the first example, the current may be interrupted at the lower voltage and the switching loss may be reduced. Further, the current may be quickly interrupted and the high-frequency operation is possible, and the switching loss may be further reduced. Note that the other configurations, operations, advantages of the example are the same as those of the first example.

The examples of the invention are explained with reference to the specific examples. However, the invention is not limited to the examples and various modifications may be made.

For example, in the above described first and second examples, the example in which the switching element 8 and the current control element 9 are the normally-on elements is shown, however, the invention is not limited to that and the elements may be normally-off elements. In this case, an activation circuit for activation of the switching power sources 2, 2a when supply of the power source voltage VIN is started is necessary.

Further, the configuration of the switching power source is not limited to the configurations shown in FIGS. 1 and 2. For example, it is only necessary that the first inductor 13 is in the path of the high-potential power source terminal 4, the switching element 8, the current control element 9 or 9a, the smoothing capacitor 15, and the low-potential power source terminal 5, and the inductor may be connected between the low-potential power source terminal 5 and the low-potential output terminal 7.

Furthermore, the switching element 8 and the current control element 9 are not limited to the GaN HEMTs. For example, the elements may be semiconductor elements formed using semiconductors having wide band gaps (wide-band-gap semiconductors) such as silicon carbide (SiC), gallium nitride (GaN), or diamond on semiconductor substrates. Here, the wide-band-gap semiconductor refers to a semiconductor having a wider band gap than gallium arsenide (GaAs) having a band gap of about 1.4 eV. For example, the wide-band-gap semiconductor refers to a semiconductor having a band gap equal to or more than 1.5 eV including gallium phosphide (GaP, having a band gap of about 2.3 eV), gallium nitride (GaN, having a band gap of about 3.4 eV), diamond (C, having a band gap of about 5.27 eV), aluminum nitride (AlN, having a band gap of about 5.9 eV), and silicon carbide (SiC). The wide-band-gap semiconductor elements have the smaller parasitic capacitance and can perform high-speed operation, and reduction in size and reduction in switching loss of the switching power source may be realized.

In addition, the lighting light source 16 is not limited to the LED, but may be an EL or an OLED, and a plurality of the lighting light sources 16 may be series- or parallel-connected to the lighting load 3.

Further, in the above described first and second examples, the case where the lighting light source is used as the load of the switching power source is exemplified, however, the exemplified switching power source may be used not only for the lighting light source but also for a load driven by a direct current.

Several embodiments and examples of the invention have been explained, however, these embodiments and examples are presented as examples and not intended to limit the scope of the invention. These new embodiments and examples may be implemented in other various forms, and various omission, replacement, changes may be made without departing from the scope of the invention. These embodiments or examples and modifications thereof are included in the scope of the invention and included in the invention described in claims and equivalent thereof.

## Claims

1. A switching power source comprising:
a first inductor;
a switching element that supplies a power source voltage to the first inductor and flows a current when being on;
a current control element that has a first main terminal, a second main terminal, and a control terminal, with the second main terminal connected to the switching element, and detects a current flowing in the switching element;
a control circuit that turns off the current control element and interrupts the current flowing in the switching element when a voltage between the second main terminal and the first main terminal of the current control element is equal to or higher than a specified value;
a rectifier element that is series-connected to one of the switching element and the current control element and flows the current of the first inductor when the switching element turns off; and
a second inductor that is magnetically coupled to the first inductor, in which a potential turning on the switching element is induced when the current of the first inductor increases and a potential turning off the switching element is induced when the current of the switching element decreases, and supplies the induced potential to a control terminal of the switching element.

2. The switching power source according to claim 1, wherein the switching element is a normally-on element.

3. The switching power source according to claim 1, wherein the control circuit outputs a negative potential to the control terminal of the current control element when the voltage between the first main terminal and the second main terminal is equal to or higher than the specified value.

4. The switching power source according to claim 1, wherein the control circuit includes a first transistor that is connected between the first main terminal and the second main terminal and turns on when the voltage between the first main terminal and the second main terminal is equal to or higher than the specified value.

5. The switching power source according to claim 4, wherein
the control circuit further includes:
a first resistor with one end connected to the first main terminal;
a second resistor with one end connected to the other end of the first resistor and the other end supplied with a potential lower than a potential of the first main terminal; and
a second transistor that is connected between the ends of the second resistor, and turns on and short-circuits the ends of the second resistor when the first transistor turns on.

6. A lighting device comprising:
the switching power source according to claim 1; and
a lighting load connected as a load circuit of the switching power source.
